# EUROPEAN PATENT APPLICATION

(11) **EP 4 095 768 A1**
(43) Date of publication of application: **30.11.2022**
(21) Application number: 20921538.3
(22) Date of filing: 29.09.2020
(51) Int. Cl.: G06N 20/00

(54) **APPLICATION RECOGNITION MODEL UPDATING METHOD AND APPARATUS, AND STORAGE MEDIUM**

(30) Priority: 29.02.2020 CN 202010132251
(71) Applicant: Huawei Technologies Co., Ltd., Shenzhen, Guangdong 518129, (CN)
(72) Inventor: SI, Xiaoyun, Shenzhen, Guangdong 518129 (CN); HU, Xinyu, Shenzhen, Guangdong 518129 (CN); XUE, Li, Shenzhen, Guangdong 518129 (CN); WU, Jun, Shenzhen, Guangdong 518129 (CN); ZHANG, Liang, Shenzhen, Guangdong 518129 (CN)
(74) Representative: Maiwald GmbH
(86) International application number: PCT/CN2020/118993
(87) International publication number: WO 2021/169294

(57) **Abstract**

A method and an apparatus for updating an application identification model, and a storage medium are provided. A client device may determine a plurality of training samples based on identification results of a plurality of pieces of data traffic, and train an application identification model using the training samples. Then, the client device may upload model data of the trained application identification model to a server, and the server performs joint update based on the model data uploaded by a plurality of client devices. Then, the client device may obtain a jointly updated application identification model based on jointly updated model data delivered by the server. It can be learned that the jointly updated application identification model is obtained through updating based on features of real-time data traffic collected by the plurality of client devices. This can better ensure identification accuracy of the application identification model even if an application is updated or a new application emerges.

## Description

This application claims priority to Chinese Patent Application No. 202010132251.0, filed on February 29, 2020 and entitled "METHOD AND APPARATUS FOR UPDATING APPLICATION IDENTIFICATION MODEL, AND STORAGE MEDIUM", which is incorporated herein by reference in its entirety.

### TECHNICAL FIELD

This application relates to the field of artificial intelligence (artificial intelligence, AI) technologies, and in particular, to a method and an apparatus for updating an application identification model, and a storage medium.

### BACKGROUND

Currently, applications during running perform data communication with corresponding application servers, so that a plurality of pieces of data traffic are generated. A client device may identify data traffic using an application identification model, to determine an application category to which the data traffic belongs, and then appropriately route the data traffic depending on the application category. Currently, an application identification model for application identification is deployed on the client device after being trained offline using training samples. However, applications are frequently updated, and new applications emerge one after another. Therefore, an application identification result obtained using such an offline trained application identification model has low accuracy.

### SUMMARY

This application provides a method and an apparatus for updating an application identification model, and a storage medium, to enhance the application identification model to identify an emerging application and improve accuracy of identifying an upgraded application. The technical solutions are as follows.

According to a first aspect, a method for updating an application identification model is provided. The method includes: determining a plurality of training samples based on application identification results of a plurality of pieces of data traffic, where the application identification results are obtained by identifying corresponding data traffic using an application identification model; training the application identification model based on the plurality of training samples; sending model data of a trained application identification model to a server, so that the server obtains jointly updated model data based on received model data sent by a plurality of client devices; receiving the jointly updated model data sent by the server; and obtaining a jointly updated application identification model based on the jointly updated model data.

In embodiments of this application, a client device may determine a plurality of training samples based on identification results of a plurality of pieces of data traffic, and train the application identification model using the training samples. Then, the client device may upload model data of the trained application identification model to the server, and the server performs joint update based on the model data uploaded by a plurality of client devices. Then, the client device may obtain a jointly updated application identification model based on jointly updated model data delivered by the server. It can be learned that model data of the jointly updated application identification model is obtained through dynamic update by the plurality of client devices based on real-time data traffic. In this way, even if an application is updated or a new application emerges, identification accuracy of the application identification model can be better ensured because the model data of the application identification model is dynamically updated based on data traffic.

Optionally, there may be three implementations of determining the plurality of training samples based on the application identification results of the plurality of pieces of data traffic. In a first implementation, unknown data traffic belonging to an unknown application from the plurality of pieces of data traffic may be obtained based on the application identification results of the plurality of pieces of data traffic, and the plurality of training samples are generated based on the unknown data traffic. In a second implementation, target data traffic belonging to a target application category from the plurality of pieces of data traffic may be obtained based on the application identification results of the plurality of pieces of data traffic, and the plurality of training samples are generated based on the target data traffic. The target application category is an application category of which feature drift occurs on a traffic feature of corresponding data traffic within a specified time period. In a third implementation, the first implementation and the second implementation are combined, the unknown data traffic belonging to the unknown application and the target data traffic belonging to the target application category are obtained from the plurality of pieces of data traffic, and the plurality of training samples are generated based on the unknown data traffic and the target data traffic.

In this embodiment of this application, the client device may obtain the unknown data traffic belonging to the unknown application in the plurality of pieces of data traffic, and then generate a training sample based on the unknown data traffic to train the application identification model. In this way, an updated application identification model can be used to better identify an emerging application, enhancing the application identification model to identify the emerging application.

In addition, for data traffic of a known application, the client device may identify an updated application by detecting whether drift occurs on a traffic feature of the data traffic, and then generate a training sample based on data traffic of the updated application to retrain the application identification model. In this way, a finally updated application identification model can better identify the updated application, and accuracy of application identification is improved.

Optionally, in the first implementation of generating the training sample, an implementation process of obtaining, based on the application identification results of the plurality of pieces of data traffic, the unknown data traffic of the unknown application from the plurality of pieces of data traffic may be: obtaining, from the plurality of pieces of data traffic, data traffic whose application identification result meets an unknown application condition, and using the obtained data traffic as the unknown data traffic belonging to the unknown application. The unknown application condition means that a confidence corresponding to each application category in the application identification result is less than a reference threshold, or the unknown application condition means that the application identification result does not belong to a plurality of specified clusters. The plurality of specified clusters are obtained by clustering traffic features of data traffic of application categories in a set of original training samples of the application identification model.

In embodiments of this application, whether the data traffic belongs to the unknown application may be determined by detecting whether the identification result of the data traffic meets the unknown application condition, so that the unknown data traffic is determined, and the training sample is generated based on the unknown data traffic, to train the application identification model.

Optionally, in the first implementation of generating the training sample, an implementation process of generating the training sample based on the unknown data traffic may be: obtaining a traffic feature of the unknown data traffic; obtaining, from the server based on the traffic feature of the unknown data traffic, application information of an application to which the unknown data traffic belongs; using the traffic feature of the unknown data traffic as training data in a first training sample; using the traffic feature of the unknown data traffic as training data in a first training sample, and using the application information of the application to which the unknown data traffic belongs as label data in the first training sample, where the first training sample is one of the plurality of training samples.

Optionally, in the second implementation of generating the training sample, an implementation process of obtaining, based on the application identification results of the plurality of pieces of data traffic, the target data traffic belonging to the target application category from the plurality of pieces of data traffic may be: determining, based on the application identification results of the plurality of pieces of data traffic, a plurality of pieces of known data traffic that do not belong to an unknown application within the specified time period from the plurality of pieces of data traffic; obtaining, from the server based on application identification results of the plurality of pieces of known data traffic, the specified time period, and an identifier of the client device, feature drift flags respectively corresponding to a plurality of application categories included in the application identification results of the plurality of pieces of known data traffic, where the feature drift flags indicates whether drift occurs on a traffic feature of data traffic of a corresponding application category; determining, from the plurality of application categories based on feature drift flags corresponding to the application categories, a target application category of which drift occurs on the traffic feature of the data traffic; and obtaining, from the plurality of pieces of known data traffic, the target data traffic belonging to the target application category.

Optionally, in the second implementation of generating the training sample, an implementation of generating the training sample based on the target data traffic may be: using a traffic feature of the target data traffic as training data in a second training sample, and using an application category, indicated by an application identification result of the target data traffic, to which the target data traffic belongs as label data in the second training sample, where the second training sample is one of the plurality of training samples.

Optionally, the model data of the trained application identification model includes a model parameter of the trained application identification model, or the model data of the trained application identification model includes difference data between a model parameter of the trained application identification model and a model parameter of an application identification model before training.

Optionally, the jointly updated model data includes a model parameter of the jointly updated application identification model, or the jointly updated model data includes difference data between a model parameter of the jointly updated application identification model and a model parameter of an application identification model before training.

According to a second aspect, a method for updating an application identification model is provided, where the method includes: receiving model data that is of a trained application identification model and that is sent by a plurality of client devices, where the trained application identification model is obtained by training an application identification model based on a plurality of training samples by corresponding client devices, and the plurality of training samples are determined by the corresponding client devices based on application identification results of a plurality of pieces of data traffic; obtaining jointly updated model data based on a plurality of received model data; and sending the jointly updated model data to the plurality of client devices, so that the plurality of client devices obtain a jointly updated application identification model based on the jointly updated model data.

In embodiments of this application, a server may obtain the jointly updated model data based on received trained model data sent by the plurality of client devices. Because the trained model data sent by the client device is obtained through dynamic update based on real-time data traffic, the jointly updated model data is obtained through dynamic update by the plurality of client devices based on the real-time data traffic. In this way, even if an application is updated or a new application emerges, identification accuracy of the application identification model can be better ensured because model data of the application identification model is dynamically updated based on data traffic corresponding to the client devices.

Optionally, before the model data that is of the trained application identification model and that is sent by the plurality of client devices is received, a traffic feature that is of unknown data traffic and that is sent by a first client device may be further received. The unknown data traffic is data traffic that belongs to an unknown application and is determined by the first client device from the plurality of pieces of data traffic. Obtaining, based on the traffic feature of the unknown data traffic, application information of an application to which the unknown data traffic belongs; and sending the application information of the application to which the unknown data traffic belongs to the first client device, so that the first client device generates a training sample based on the application information of the application to which the unknown data traffic belongs.

In embodiments of this application, the server may obtain corresponding application information based on a traffic feature of unknown data traffic sent by a client device, and feed back the application information to the client device. Therefore, the client device may generate a training sample based on the unknown data traffic to train the application identification model. In this way, an updated application identification model can be used to better identify an emerging application, enhancing the application identification model to identify the emerging application.

Optionally, before the model data that is of the trained application identification model and that is sent by the plurality of client devices is received, application identification results of a plurality of pieces of known data traffic, a specified time period, and an identifier of the first client device that are sent by the first client device may be further received. The plurality of pieces of known data traffic are data traffic that does not belong to the unknown application within the specified time period and that is determined from the plurality of pieces of data traffic; determining a current profile of a corresponding application category based on the application category and a confidence corresponding to the application category that are included in the application identification results of the plurality of pieces of known data traffic; obtaining, based on the identifier of the first client device, a profile of each application category that corresponds to the specified time period and that is determined most recently; determining, based on a current profile of each application category and a profile of the corresponding application category that is determined most recently, a feature drift flag corresponding to the application category, where the feature drift flag indicates whether drift occurs on a traffic feature of data traffic of the corresponding application category; and sending feature drift flags corresponding to the application categories to the first client device, so that the first client device obtains, based on the feature drift flags corresponding to the application categories, data traffic belonging to a target application category, and generates a training sample based on the data traffic belonging to the target application category, where the target application category is an application category of which drift occurs on the traffic feature of the data traffic.

In embodiments of this application, for data traffic of a known application, the server may detect, by determining a profile of each application category, whether drift occurs on a traffic feature of data traffic of a corresponding application category, and feed back, to the client device, a feature drift flag indicates whether drift occurs on the feature. The client device may identify an updated application based on the feature drift flag, and then generate a training sample based on data traffic of the updated application to retrain the application identification model. In this way, a finally updated application identification model can better identify the updated application, and accuracy of application identification is improved.

According to a third aspect, an apparatus for updating an application identification model is provided. The apparatus for updating an application identification model has functions of implementing behavior in the method for updating an application identification model according to the first aspect or the second aspect. The apparatus for updating an application identification model includes at least one module, and the at least one module is configured to implement the method for updating an application identification model according to the first aspect or the second aspect.

According to a fourth aspect, an apparatus for updating an application identification model is provided. A structure of the apparatus for updating an application identification model includes a processor and a memory. The memory is configured to store a program for supporting the apparatus for updating an application identification model in performing the method for updating an application identification model provided in the first aspect or the second aspect, and store data used to implement the method for updating an application identification model according to the first aspect or the second aspect. The processor is configured to execute the program stored in the memory. An operation apparatus of the storage device may further include a communication bus, and the communication bus is configured to establish a communication connection between the processor and the memory.

According to a fifth aspect, a computer-readable storage medium is provided. The computer-readable storage medium stores instructions; and when the instructions are run on a computer, the computer is enabled to perform the method for updating an application identification model according to the first aspect or the second aspect.

According to a sixth aspect, a computer program product including instructions is provided. When the computer program product runs on a computer, the computer is enabled to perform the method for updating an application identification model according to the first aspect or the second aspect.

Technical effects achieved by the third aspect, the fourth aspect, the fifth aspect, and the sixth aspect are similar to those achieved by corresponding technical means in the first aspect or the second aspect. Details are not described herein again.

Beneficial effects brought by the technical solutions provided in this application include at least the following.

In embodiments of this application, a client device may determine a plurality of training samples based on identification results of a plurality of pieces of data traffic, and train the application identification model using the training samples. Then, the client device may upload model data of the trained application identification model to a server, and the server performs joint update based on the model data uploaded by a plurality of client devices. Then, the client device may obtain a jointly updated application identification model based on jointly updated model data delivered by the server. It can be learned that the jointly updated application identification model is obtained through dynamic update based on features of data traffic collected by the plurality of client devices. In this way, even if an application is updated or a new application emerges, identification accuracy of the application identification model can be better ensured because the model data of the application identification model is dynamically updated based on the features of the data traffic collected by the client devices.

### BRIEF DESCRIPTION OF DRAWINGS

FIG. 1 is a diagram of a system architecture related to a method for updating an application identification model according to an embodiment of this application;
FIG. 2 is a diagram of another system architecture related to a method for updating an application identification model according to an embodiment of this application;
FIG. 3 is a schematic diagram of a structure of a computer device for updating an application identification model according to an embodiment of this application;
FIG. 4 is a flowchart of a method for updating an application identification model according to an embodiment of this application;
FIG. 5 is a schematic diagram of a structure of an apparatus for updating an application identification model according to an embodiment of this application;
FIG. 6 is a schematic diagram of a structure of a determining module that is configured to generate a plurality of training samples according to an embodiment of this application; and
FIG. 7 is a schematic diagram of another structure of an apparatus for updating an application identification model according to an embodiment of this application.

### DESCRIPTION OF EMBODIMENTS

To make the objectives, technical solutions, and advantages of this application more clearly, the following further describes the implementations of this application in detail with reference to the accompanying drawings.

Before embodiments of this application are described in detail, application scenarios in embodiments of this application are first described.

Application identification means to identify data traffic of a client device to determine an application category to which the data traffic belongs. With the function of identifying the application category to which the data traffic belongs, the client device may use it elsewhere. For example, the client device may route data traffic more appropriately, that is, set, depending on the application category to which the data traffic belongs, a priority for receiving or sending the data traffic.

Currently, an offline trained AI model may be used for identification of data traffic. Identification accuracy of the AI model depends on whether a set of training samples used for offline training effectively describe actual possible traffic distribution. However, as applications update and new applications emerge, the set of training samples that are originally used for training the AI model gradually cannot represent current traffic distribution. In this case, the identification accuracy of the AI model is reduced. A method for updating an application identification model provided in embodiments of this application may be used in the foregoing scenario. After retraining the AI model based on traffic features of collected data traffic, a client device uploads model data of a retrained AI model to a server, and the server performs joint update based on model data uploaded by a plurality of client devices, to update the AI model.

The following describes a system architecture related to the method for updating an application identification model according to embodiments of this application.

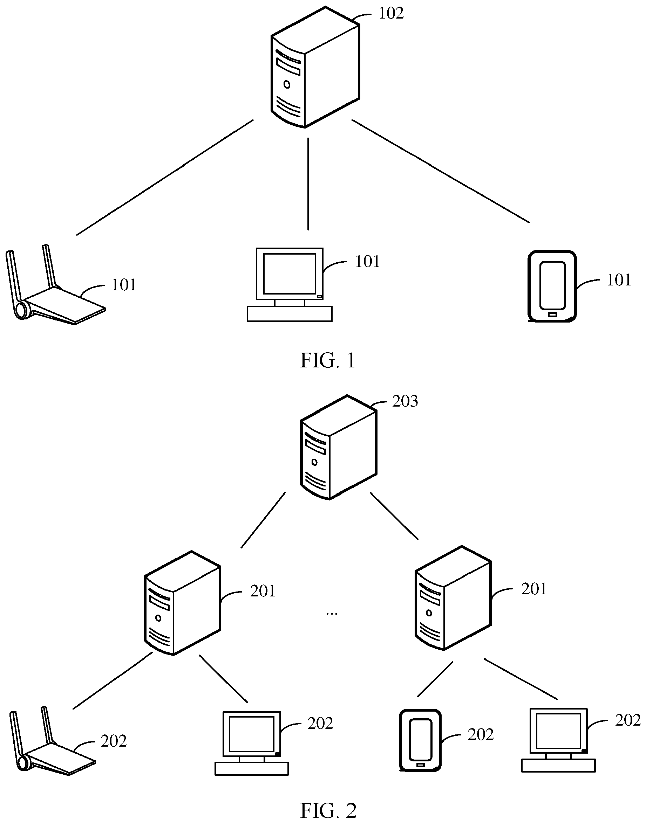

FIG. 1 is a diagram of a system architecture related to a method for updating an application identification model according to an embodiment of this application. As shown in FIG. 1, the system includes a plurality of client devices 101 and a server 102. All the plurality of client devices 101 may communicate with the server 102.

An application identification model is deployed on each client device 101. In addition, a plurality of applications may be installed on the client device 101, or a plurality of applications may be installed on a terminal corresponding to the client device 101. An application during running may perform data communication with an application server corresponding to the application, and data traffic is generated. The data traffic passes through the client device. Each of the client devices may identify the data traffic using the application identification model of the client device, to obtain an application identification result. In a process of identifying the data traffic, the client devices 101 may collect training samples based on application identification results of the data traffic by using the method provided in embodiments of this application, and then retrain the application identification model based on the collected training samples. Then, the client devices 101 may upload model data of a retrained application identification model to the server 102.

The server 102 may receive the model data uploaded by the client devices, and obtain jointly updated model data based on the model data uploaded by the client devices. Then, the server may deliver the jointly updated model data to each of the client devices 101.

After receiving the jointly updated model data delivered by the server 102, each of the client devices 101 may obtain a jointly updated application identification model based on the jointly updated model data. If the jointly updated application identification model meets a convergence condition, the client devices 101 may subsequently identify data traffic using the jointly updated application identification model. Certainly, if the jointly updated application identification model does not meet the convergence condition, the client devices 101 may continue to train the application identification model, and then continue to upload trained model data to the server. The server may also continue to perform joint update until a jointly updated application identification model meets the convergence condition. In other words, in embodiments of this application, the client device and the server may update the application identification model for a single round or a plurality of rounds. This is not limited in embodiments of this application.

It should be noted that the client device 101 may be a device that supports local training. For example, the client device 101 may be a mobile phone, a tablet computer, a desktop computer, a notebook computer, a switch, an optical line terminal (optical line terminal, OLT), an optical network terminal (optical network terminal, ONT), a router, a switch, or the like. This is not limited in embodiments of this application.

The server 102 may be a device that supports joint learning. For example, the server 102 may be a server or a server cluster for joint training, or a cloud service platform that supports joint training. This is not limited in embodiments of this application.

Optionally, FIG. 2 is a schematic diagram of another system architecture according to an embodiment of this application. Refer to FIG. 2. The system may include a plurality of client devices 201, a plurality of network devices 202, and a server 203. Each client device 201 may correspond to one or more network devices 202, and the one or more network devices 202 corresponding to each client device 201 are one or more network devices in one site.

In this implementation, the client device 201 may also be referred to as a site analysis device (also referred to as a site analysis platform). The client device 201 may be a server, or a server cluster including several servers, or a cloud computing service center. In this application scenario, a model update method-related system includes a plurality of site networks. The site network may be a core network, or may be an edge network. A user of each site network may be a carrier or an enterprise customer. Different site networks may be different networks divided depending on corresponding dimensions. For example, the site networks may be networks in different regions, networks of different carriers, networks of different services, and different network domains. Each site network includes one or more network devices. The plurality of client devices 201 may one-to-one correspond to the plurality of site networks. Each client device 201 is configured to provide a data analysis service for a corresponding site network, that is, each client device 201 may correspond to one or more network devices 202 in one site network, to provide services such as data analysis for the client device 201. Each client device 201 may be located inside or outside a corresponding site analysis network. Each client device 201 is connected to the server 203 through a wired network or a wireless network. A communication network in embodiments of this application is a 2nd generation (2nd Generation, 2G) communication network, a 3rd generation (3rd Generation, 3G) communication network, a long term evolution (Long Term Evolution, LTE) communication network, a 5th generation (5th Generation, 5G) communication network, or the like.

In addition, the server 203 may be a cloud analysis device (also referred to as a cloud analysis platform). The server 203 may be a computer, or a server, or a server cluster including several servers, or a cloud computing service center. The server 203 is deployed at a back end of a service network.

The network device 202 may be a mobile phone, a tablet computer, a desktop computer, a notebook computer, a switch, an optical line terminal (optical line terminal, OLT), an optical network terminal (optical network terminal, ONT), a router, a switch, or the like. This is not limited in embodiments of this application.

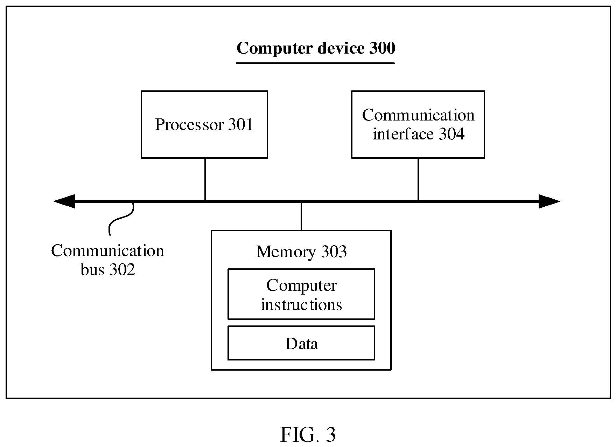

FIG. 3 is a schematic diagram of a structure of a computer device according to an embodiment of this application. The client device or the server in FIG. 1 or FIG. 2 may be implemented by using the computer device shown in FIG. 3. In FIG. 3, the computer device includes at least one processor 301, a communication bus 302, a memory 303, and at least one communication interface 304.

The processor 301 may be a general-purpose central processing unit (Central Processing Unit, CPU), an application-specific integrated circuit (application-specific integrated circuit, ASIC), a graphics processing unit (graphics processing unit, GPU), or any combination thereof. The processor 301 may include one or more chips. The processor 301 may include an AI accelerator, for example, a neural processing unit (neural processing unit, NPU).

The communication bus 302 may include a channel for transferring information between the foregoing components.

The memory 303 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM), or other compact disc storage or optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of instructions or data structures and capable of being accessed by a computer. This is not limited. The memory 303 may exist independently, and is connected to the processor 301 through the communication bus 302. The memory 303 may alternatively be integrated with the processor 301. The memory 303 may store computer instructions. When the computer instructions stored in the memory 303 are executed by the processor 301, the method for updating an application identification model in this application may be implemented. In addition, the memory 303 may further store intermediate data and/or result data generated by the processor in a process of performing the foregoing method.

The communications interface 304 is any transceiver-type apparatus, and is configured to communicate with another device or a communications network, for example, an Ethernet, a radio access network (RAN), or a wireless local area network (Wireless Local Area Network, WLAN).

During specific implementation, in an embodiment, the processor 301 may include one or more CPUs.

In specific implementation, in an embodiment, the computer device may include a plurality of processors. Each of the processors may be a single-core (single-CPU) processor, or may be a multi-core (multi-CPU) processor. The processor herein may be one or more devices, circuits, and/or processing cores configured to process data (for example, computer program instructions).

The following describes in detail the method for updating an application identification model according to embodiments of this application.

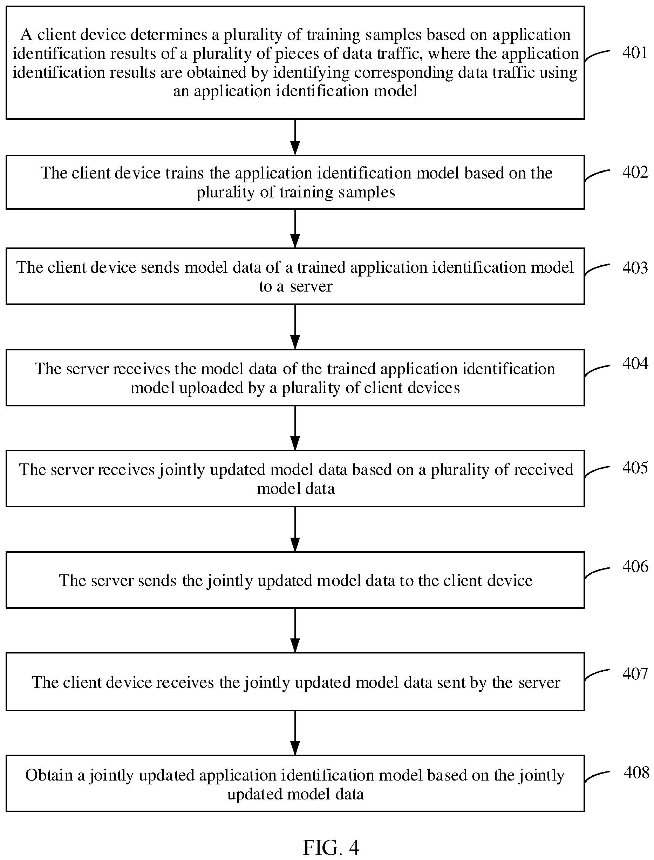

FIG. 4 is a flowchart of a method for updating an application identification model according to an embodiment of this application. The method may be applied to the system shown in FIG. 1 or FIG. 2. In FIG. 4, the method includes the following steps.

Step 401: A client device determines a plurality of training samples based on application identification results of a plurality of pieces of data traffic, where the application identification results are obtained by identifying corresponding data traffic using an application identification model.

In this embodiment of this application, the application identification model is deployed on the client device. The application identification model may be an AI model trained offline, or may be an AI model updated for a plurality of times. The client device may be the client device in the system shown in FIG. 1 or FIG. 2.

In a possible implementation, when the client device is the client device in FIG. 1 and runs an application, or when a terminal corresponding to the client device runs an application, the client device may perform data communication with an application server of the application, to generate data traffic that passes through the client device. For example, the client device may send a data request to the application server, and the application server may return application data to the client device. Both data sent by the client device to the application server and data returned by the application server to the terminal may be referred to as data traffic that passes through the client device. The plurality of pieces of data traffic in this step may be data traffic that passes through the client device.

Optionally, in another possible implementation, for the client device in FIG. 2, the client device may correspond to one or more network devices in one site network. In this case, when data traffic passes through the one or more network devices, the one or more network devices may report, to the client device, a traffic feature of the data traffic that passes through the one or more network devices. In this case, the plurality of pieces of data traffic in this step may be data traffic that passes through one or more network devices in the site network corresponding to the client device.

In other words, in this embodiment of this application, the plurality of pieces of data traffic may be data traffic that passes through the client device, or may be data traffic that does not pass through the client device but passes through the one or more network devices in the site network served by the client device.

For each piece of data traffic in the plurality of pieces of data traffic, the client device may obtain a traffic feature of the data traffic, and input the traffic feature into the application identification model, to obtain an application identification result of the data traffic through identification using the application identification model.

The application identification result may include an application category to which the data traffic may belong and a confidence corresponding to each application category. It should be noted that the application category may be a specific application name, for example, an application A or an application B. Alternatively, the application category may be an application type, for example, a video application, a game application, or a voice application. In other words, in this embodiment of this application, the application identification result may indicate an application to which the data traffic belongs, or may indicate a type of application to which the data traffic belongs. This is not limited in this embodiment of this application. For each piece of data traffic, the client device may obtain an application identification result of each piece of data traffic using the application identification model.

It should be noted that, in this embodiment of this application, the plurality of pieces of data traffic may be data traffic of an unknown application, or may be data traffic of a known application. The client device may generate a first training sample based on the data traffic of the unknown application. The client device may generate a second training sample based on data traffic with a relatively large change in a traffic feature in the data traffic of the known application.

The following separately describes implementations corresponding to the foregoing two cases.

### (1) First implementation

After the client device obtains the application identification results of the data traffic using the application identification model, the client device may determine, based on an application identification result of each piece of data traffic, whether corresponding data traffic is unknown data traffic belonging to an unknown application, to obtain one or more pieces of unknown data traffic belonging to the unknown application from the plurality of pieces of data traffic.

Any one of the plurality of pieces of data traffic is used as an example. For ease of description, the data traffic is referred to as first data traffic. The client device may detect, based on an application identification result of the first data traffic, whether the first data traffic meets an unknown application condition. If the first data traffic meet s the unknown application condition, it indicates that the first data traffic is unknown data traffic belonging to an unknown application.

For example, the unknown application condition may be that confidences of application categories in the application identification result are all less than a specified threshold. That is, if confidences of various application categories included in the application identification result of the first data traffic are all less than the specified threshold, it may be determined that the first data traffic meets the unknown application condition, that is, the first data traffic is unknown data traffic belonging to an unknown application. Otherwise, it may be determined that the first data traffic does not meet the unknown application condition, and the first data traffic is known data traffic that does not belong to an unknown application.

Optionally, the unknown application condition may alternatively mean that an application identification result does not belong to a plurality of specified clusters. The plurality of specified clusters are obtained by clustering traffic features of data traffic of application categories in a set of original training samples of the application identification model. In other words, in this embodiment of this application, the client device may cluster training samples of all application categories in a set of original training samples used for offline training, to obtain a plurality of clusters, which are the plurality of specified clusters. In this way, after identifying a traffic feature of the first data traffic using the application identification model, the client device may compare the identification result with a cluster center and a confidence radius that are of a cluster corresponding to each application category. If the identification result does not belong to a confidence radius cluster of any cluster center, that is, does not belong to any cluster of the plurality of clusters, it may be determined that the first data traffic meets the unknown application condition. That is, the first data traffic is unknown data traffic belonging to an unknown application. Otherwise, it may be determined that the first data traffic does not meet the unknown application condition, and the first data traffic is known data traffic that does not belong to an unknown application.

After one or more pieces of unknown data traffic are determined by using the foregoing method, because the unknown data traffic may belong to an unknown application, and samples previously used for training the application identification model may not include related samples of the unknown application, the client device may generate a corresponding first training sample based on each piece of unknown data traffic.

Any piece of the unknown data traffic is used as an example. The client device may obtain a traffic feature of the unknown data traffic; obtain, from the server based on the traffic feature of the unknown data traffic, application information of an application to which the unknown data traffic belongs; use the traffic feature of the unknown data traffic as training data in a first training sample; use the traffic feature of the unknown data traffic as training data in the first training sample, and use the application information of the application to which the unknown data traffic belongs as label data in the first training sample.

The traffic feature of the unknown data traffic may include moments of received and sent packets, 5 - tuples of the received and sent packets, domain name system (domain name system, DNS) addresses, lengths of the received and sent packets, a quantity of the received and sent packets, uniform resource locators (uniform resource locator, URL), and the like of the plurality of data packets included in the unknown data traffic.

After obtaining the traffic feature of the unknown data traffic, the client device may obtain, from the server based on traffic key information such as the DNS address, the 5-tuple of received and sent packet, or the URL included in the traffic feature of the unknown data traffic, application information of the application to which the unknown data traffic belongs.

In a possible implementation, the client device may send the traffic key information included in the traffic feature of the unknown data traffic to the server. The server may obtain, based on the traffic key information, the application information of the application to which the unknown data traffic belongs.

It should be noted that the server may store a mapping relationship between the traffic key information and the application information. If the server stores a mapping relationship between a URL and the application information, that is, the traffic key information stored in the server is a URL, the client device may send the URL included in the traffic feature of the unknown data traffic to the server. After receiving the URL, the server may obtain, from the stored mapping relationship, application information corresponding to the URL, and send the application information to the client device. After receiving the application information, the client device may use the application information as the application information of the application to which the unknown data traffic belongs. The application information may include information such as an application name and an application type.

Optionally, if the traffic key information in the mapping relationship stored in the server is an IP address, the client device may send the 5-tuple of the received and sent packet to the server, and the server may obtain the IP address from the 5-tuple, obtain application information corresponding to the IP address from the stored mapping relationship, and send the obtained application information to the client device. After receiving the application information, the client device may use the application information as the application information of the application to which the unknown data traffic belongs.

Optionally, if the traffic key information in the mapping relationship stored in the server is a DNS address, the client device may send the DNS address included in a key feature of the unknown data traffic to the server, and the server may obtain, from the stored mapping relationship, application information corresponding to the DNS address, and return the application information to the client device. After receiving the application information, the client device may use the application information as the application information of the application to which the unknown data traffic belongs.

Optionally, the mapping relationship stored in the server may alternatively be a mapping relationship between an IP address, a DNS address, a URL, and application information. In this case, the client device may send any one or more of a 5-tuple of received and sent packet, a DNS address, or a URL in traffic feature of the unknown data traffic to the server, to obtain the corresponding application information. Details are not described herein in this embodiment of this application.

In another possible implementation, the client device may directly send the traffic feature of the unknown data traffic to the server, and the server may obtain, based on the traffic key information included in the traffic feature, the application information of the application to which the unknown data traffic belongs. In this case, the server may obtain, based on a type of the traffic key information in the mapping relationship stored in the server, traffic key information of a corresponding type from the traffic feature, and obtain, based on the obtained traffic key information, corresponding application information from the mapping relationship. For example, assuming that the server stores a mapping relationship between the URL and the application information, the server may obtain the URL from a received traffic feature, and then obtain the corresponding application information based on the obtained URL

It should be noted that, in some possible cases, the server does not find, from the mapping relationship, the corresponding application information based on the traffic key information reported by the client device. In this case, the server may display the traffic key information to a skilled person for reviewing, and receives application information that corresponds to the traffic key information and that is input by the skilled person. Then, the server may return the application information to the client device. Similarly, the server further needs to correspondingly store, in a foregoing mapping relationship table, the traffic key information and the application information input by the skilled person, for subsequent query and use.

After receiving the application information that is returned by the server and that is of the application to which the unknown data traffic belongs, the client device may use the obtained traffic feature of the unknown data traffic as training data, and use the received application information of the application to which the unknown data traffic belongs as label data corresponding to the training data. The training data and the label data constitute the first training sample corresponding to the unknown data traffic. The first training sample is stored in a training data storage area of the client device.

For each piece of detected unknown data traffic that meets the unknown application condition, the client device may process the data traffic by using the foregoing method, to obtain a corresponding first training sample.

### (2) Second implementation

The foregoing describes a manner of processing data traffic that meets the unknown application condition. Optionally, the plurality of pieces of data traffic may further include known data traffic that does not belong to an unknown application. Based on this, the client device may further determine, based on the application identification results of the plurality of pieces of data traffic, target data traffic belonging to a target application category from the plurality of pieces of data traffic. The target application category is an application category of which feature drift occurs on a traffic feature of corresponding data traffic within a specified time period. Then, a second training sample may be generated based on the target data traffic belonging to the target application category.

For example, first, the client device may determine, from the plurality of pieces of data traffic based on the application identification results of the plurality of pieces of data traffic, a plurality of pieces of known data traffic that do not belong to an unknown application within a specified time period. Then, the client device may obtain, from the server based on application identification results of the plurality of pieces of known data traffic, the specified time period, and an identifier of the client device, feature drift values respectively corresponding to a plurality of application categories included in the application identification results of the plurality of known data traffic. The client device determines, from the plurality of application categories, a target application category whose feature drift value is equal to a reference drift value; and obtains, from the plurality of pieces of known data traffic, the data traffic belonging to the target application category.

It should be noted that, each time the client device receives or sends a piece of data traffic, the client device may detect whether an application identification result of the data traffic meets the unknown application condition. If the application identification result of the data traffic does not meet the unknown application condition, the client device may determine that the data traffic is known data traffic that does not belong to the unknown application. For an implementation of detecting whether the application identification result of the data traffic meets the unknown application condition, refer to the foregoing related descriptions. Details are not described herein in this embodiment of this application.

In addition, in this embodiment of this application, the client device may store the application identification results of the data traffic based on different time periods. Based on this, when determining that a piece of data traffic is known data traffic, the client device may add, based on a receiving moment or a sending moment of the known data traffic, an application identification result of the known data traffic to a set of identification results corresponding to a specified time period that includes a receiving moment or sending moment. In this way, the client device may obtain a plurality of pieces of known data corresponding to the specified time period.

For example, one piece of data traffic in the plurality of pieces of data traffic is known data traffic, the data traffic is received or sent at 19:30, and the client device stores a set of identification results corresponding to a time period from 19:00 to 21:00. In this case, the client device may add the identification result of the known data traffic to the set of identification results of the time period. In this way, the client device may determine all known data traffic corresponding to the time period, and then obtain the application identification results of the known data traffic corresponding to the time period.

For each time period, the client device may determine and obtain known data traffic corresponding to a time period by using the foregoing method.

After obtaining the application identification results of the plurality of pieces of known data traffic corresponding to the specified time period, the client device may send the application identification results of the known data traffic corresponding to the specified time period, the specified time period, and the identifier of the client device to the server one by one or in batches or at a time.

The identifier of the client device may be a geographic position of the client device, a device identifier of the client device, or the like. This is not limited in this embodiment of this application.

After receiving the application identification results of the plurality of pieces of known data traffic corresponding to the specified time period, the specified time period, and the identifier of the client device that are sent by the client device, the server may determine a current profile of a corresponding application category based on the application category and a confidence corresponding to the application category that are included in the application identification results of the plurality of pieces of known data traffic within the specified time period. Then, the server may obtain, based on the identifier of the client device, a profile that is of each application category and that corresponds to the specified time period and that is determined most recently. The server determines, based on a current profile of each application category and a profile of the corresponding application category that is determined most recently, a feature drift flag corresponding to the application category, where the feature drift flag indicates whether drift occurs on a traffic feature of data traffic of the corresponding application category; and sends feature drift flags corresponding to the application categories to the client device.

For an application identification result of any piece of known data traffic, the server may use an application category with a highest confidence among application categories included in the application identification result as a final application category of the known data traffic. A plurality of application identification results are classified based on final application categories of a plurality of pieces of known data traffic. Then, the server may determine a profile of a corresponding application category based on a quantity of application identification results corresponding to each final application category and a confidence of the final application category in the application identification results.

In addition, the profile of each application category that is determined most recently and that corresponds to the time period may be a profile that is of each application category of the client device corresponding to the specified time period in a previous period and that is determined most recently, or an average profile that is of each application category of the client device corresponding to the specified time period in previous periods and that is determined most recently.

After determining the current profile of each application category and obtaining the most recently determined profile of each application category, the server may compare two profiles of a same application category. If a difference value between the two profiles exceeds a preset threshold, the server may determine that drift occurs on a traffic feature of data traffic of the application category corresponding to the two profiles, that is, an application of the application category may be updated. In this case, a feature drift flag corresponding to the application category may be set to a first flag. If the difference value between the two profiles does not exceed the preset threshold, it may be determined that the traffic feature of the data traffic of the application category corresponding to the two profiles changes slightly and drift does not on the traffic feature, that is, the application of the application category is not updated. In this case, a feature drift flag of the application category corresponding to the two profiles may be set to a second flag different from the first flag.

It should be noted that, in this embodiment of this application, the server may maintain a feature drift field in a sequence of application categories. The feature drift field may include a plurality of feature drift flag bits, and each feature drift flag bit may correspond to one application category. A default value of the plurality of feature drift flag bits may be the second flag, for example, may be 0. Based on this, after determining, by using the foregoing method, that drift occurs on the traffic feature of the data traffic of the application category, the server may set, to the first flag, a feature drift flag bit that corresponds to the application category and that is in the feature drift field, where the reference drift value may be 1. If drift does not occur on the traffic feature of the data traffic of the application category, the feature drift flag bit corresponding to the application category may retain the default value 0. In this way, a value of a feature drift flag bit corresponding to each application category in the feature drift field may be determined, and then the server may send the feature drift field to the client device, so that the client device determines specific application categories of which drift occurs on traffic features of data traffic.

For example, assuming that the server receives application identification results that are uploaded by the client device and that are between 19:00 and 21:00 on a current day, the application identification results include three application categories: a video-type category, a game-type category, and a voice-type category, and a confidence corresponding to each application category. In this case, the server may use an application category corresponding to a maximum confidence in each application identification result as a final application category corresponding to the application identification result. In this way, the server may classify the plurality of application identification results into different application categories based on the final application categories corresponding to the application identification results, to obtain a video-type application identification result, a game-type application identification result, and a voice-type application identification result. Then, the server may determine to obtain a profile of the application category based on a confidence of the application category in the application identification result of the application category and a quantity of included application identification results. After determining the profile of each application category, the server may obtain a profile of each application category that is obtained based on the application identification result corresponding to a time period from 19:00 to 21:00 on a day before the current day. Then, the server may compare a difference between profiles of a same application category, to determine whether the difference between the profiles exceeds a preset threshold, to further determine a feature drift flag corresponding to the application category.

After determining the feature drift flag corresponding to each application category, the server may send the feature drift flags corresponding to all the application categories to the client device. After receiving the feature drift flags corresponding to the application categories, the client device may use an application category whose feature drift flag is the first flag as the target application category. Then, the client device may determine a final application category of each piece of known data traffic based on the application identification results that are of the plurality of pieces of known data traffic corresponding to the specified time period and that are previously reported to the server, and use the data traffic whose final application category is the target application category as the target data traffic belonging to the target application category.

It should be noted that, as described above, the server may send a feature drift field including a plurality of feature drift flag bits to the client device. After receiving the feature drift field, the client device may determine, from the feature drift field, an application category corresponding to a feature drift flag bit whose value is the first flag, and then use the determined application category as the target application category.

After the client device determines the target data traffic, for each piece of target data traffic, the client device may obtain a traffic feature of the target data traffic, use the traffic feature of the target data traffic as training data, and use an application identification result of the target data traffic as label data of the training data, so that the training data and the label data form a second training sample.

For each piece of determined data traffic, the client device may determine and obtain a corresponding second training sample by using the method. Then, the client device may store the obtained second training sample in the training data storage area of the client device.

It should be noted that in this embodiment of this application, a plurality of training samples may be generated using the foregoing two possible implementations. In this way, the training data storage area may store both the first training sample generated in the first implementation and the second training sample generated in the second implementation. Optionally, in this embodiment of this application, the training sample may be generated in any one of the foregoing implementations. In this case, the training data storage area may store the first training sample generated in the first implementation or the second training sample generated in the second implementation. This is not limited in embodiments of this application.

Step 402: The client device trains the application identification model based on the plurality of training samples.

In this embodiment of this application, the client device may generate the first training sample based on the unknown application data traffic, and may generate the second training sample based on data traffic on which the feature drift occurs on the known data traffic. The generated first training sample and second training sample may be stored in the training data storage area.

A size of the training data storage area may be fixed. In this way, when detecting that a size occupied by training samples stored in the training data storage area reaches a specific threshold, the client device may trigger training of the application identification model. The specific threshold is less than or equal to the size of the training data storage area.

Optionally, in a possible case, the client device may trigger training of the application identification model when detecting a user instruction or when a specified moment arrives. This is not limited in this embodiment of this application.

After triggering training of the application identification model, the client device may obtain a plurality of stored training samples from the training data storage area, and train a current application identification model using the obtained plurality of training samples.

The client device may perform one round of training or a plurality of rounds of training on the application identification model using the obtained plurality of training samples. This is not limited in embodiments of this application.

Step 403: The client device sends model data of a trained application identification model to the server.

In this embodiment of this application, after locally training the application identification model based on the plurality of training samples, the client device may obtain a model parameter of the trained application identification model, determine differential data between the model parameter of the trained application identification model and a model parameter of an application identification model before training, and then upload the differential data to the server as the model data of the trained application identification model.

For example, assuming that the model parameter of the application identification model before training is [a1, b1, c1, d1, ...], and the model parameter of the trained application identification model is [a2, b2, c2, d2, ...], the client device may determine differential data: [a2-a1, b2-b1, c2-c1, d2-d1, ...], and report the differential data to the server.

Optionally, in a possible implementation, the client device may directly report the model parameter of the trained application identification model to the server as model data. For example, assuming that a parameter of the trained application identification model is [a2, b2, c2, d2, ...], the client device may directly report [a2, b2, c2, d2, ...] to the server.

Optionally, in another possible implementation, the client device may report complete data (including a model parameter and a model structure) of the trained application identification model to the server.

Step 404: The server receives the model data of the trained application identification mode uploaded by a plurality of client devices.

Step 405: The server obtains jointly updated model data based on a plurality of pieces of received model data.

Implementations of this step vary with different implementations of the model data reported by the client device.

When the model data reported by the client device is differential data between model parameters of application identification models before and after training, the server may perform joint averaging on differential data reported by the client devices, and use a joint averaging result as the jointly updated model data. Alternatively, the server may jointly update, based on the differential data reported by the client devices, a model parameter of an application identification model currently deployed on the server, and use differential data between a jointly updated model parameter and a model parameter that is not updated as the jointly updated model data. Alternatively, the server may jointly update, based on the differential data reported by the client devices, a model parameter of an application identification model currently deployed on the server, and directly use a jointly updated model parameter as the jointly updated model data. Alternatively, the server may jointly update, based on the differential data reported by the client devices, a model parameter of an application identification model currently deployed on the server, and use complete data (including a model structure and a model parameter) of the jointly updated application identification model as the jointly updated model data.

Optionally, when the model data reported by the client device is the model parameter of the trained application identification model, the server may perform joint averaging on model parameters reported by the client devices, and directly use a model parameter obtained through joint averaging as the jointly updated model data. Alternatively, the server may jointly update, based on model parameters reported by the client devices, an application identification model deployed by the server, and then use, as the jointly updated model data, differential data between a model parameter of a jointly updated application identification model and a model parameter of an application identification model that is not updated, or a model parameter of a jointly updated application identification model, or complete data (including a model structure and a model parameter) of a jointly updated application identification model.

Optionally, when the model data reported by the client device is the complete data (including the model parameter and the model structure) of the trained application identification model, the server may jointly update the application identification model based on model parameters of the application identification models reported by client devices. Then, the server may use, as the jointly updated model data, the complete data (including the model structure and the model parameter) of the jointly updated application identification model or the model parameter of the jointly updated application identification model.

It should be noted that, in the foregoing implementation, if joint averaging is directly performed on the model data reported by the client devices, after obtaining the joint averaging result, the server may further update, based on the joint averaging result, a model parameter of the application identification model deployed on the server, to obtain the jointly updated application identification model.

Because the model data updated by the server is obtained through joint update based on the model data reported by the client devices, that is, the jointly updated application identification model is updated based on the traffic data of the client devices. Therefore, the model parameter of the application identification model can reflect traffic distribution of more client devices.

Step 406: The server sends the jointly updated model data to the client device.

After obtaining the jointly updated model data, the server may deliver the jointly updated model data to each client device that reports the trained model data.

Step 407: The client device receives the jointly updated model data sent by the server.

Step 408: The client device obtains the jointly updated application identification model based on the jointly updated model data.

After receiving the jointly updated model data delivered by the server, the client device may obtain the jointly updated application identification model based on the jointly updated model data.

If the jointly updated model data is the differential data, the client device may update, based on the differential data, the application identification model before training, to obtain the jointly updated application identification model.

Optionally, if the jointly updated model data is the model parameter, the client device may update, based on the model parameter, the application identification model before training or after training, to obtain the jointly updated application identification model.

Optionally, if the jointly updated model data is the complete data (including the model structure and the model parameter) of the jointly updated application identification model, the client device may directly load the model data to obtain the jointly updated application identification model.

After obtaining the jointly updated application identification model, the client device may detect whether the jointly updated application identification model meets a convergence condition. If the jointly updated application identification model meets the convergence condition, the client uses the jointly updated application identification model as a final model obtained through updating.

Optionally, if the jointly updated application identification model does not meet the convergence condition, the client device may return to step 402, to continue to train the updated application identification model using a plurality of training samples, and upload model data obtained through continuous training to the server. The server performs joint update again until a jointly updated application identification model that is obtained by the client devices based on jointly updated model data delivered by the server meets the convergence condition.

It should be noted that, in the foregoing embodiment, the operation performed by the client device may be implemented as an independent embodiment, and the operation performed by the server may also be implemented as an independent embodiment. This is not limited in this embodiment of this application.

In this embodiment of this application, the client device may determine the plurality of training samples based on the identification results of the plurality of pieces of data traffic, and train the application identification model using the training samples. Then, the client device may upload the model data of the trained application identification model to the server, and the server performs joint update based on the model data uploaded by the plurality of client devices. Then, the client device may obtain the jointly updated application identification model based on the jointly updated model data delivered by the server. It can be learned that the jointly updated application identification model is obtained through dynamic update based on real-time data traffic corresponding to the plurality of client devices. In this way, even if an application is updated or a new application emerges, identification accuracy of the application identification model can be better ensured because the model data of the application identification model is dynamically updated based on the data traffic corresponding to the client devices.

In addition, the client device may obtain the unknown data traffic belonging to the unknown application in the data traffic, and then generate a training sample based on the unknown data traffic to train the application identification model. In this way, an updated application identification model can be used to better identify an emerging application, enhancing the application identification model to identify the emerging application.

Finally, in this embodiment of this application, for data traffic of a known application, the client device may identify an updated application by detecting whether drift occurs on a traffic feature of the data traffic, and then generate a training sample based on data traffic of the updated application to retrain the application identification model. In this way, a finally updated application identification model can better identify the updated application, and accuracy of application identification is improved.

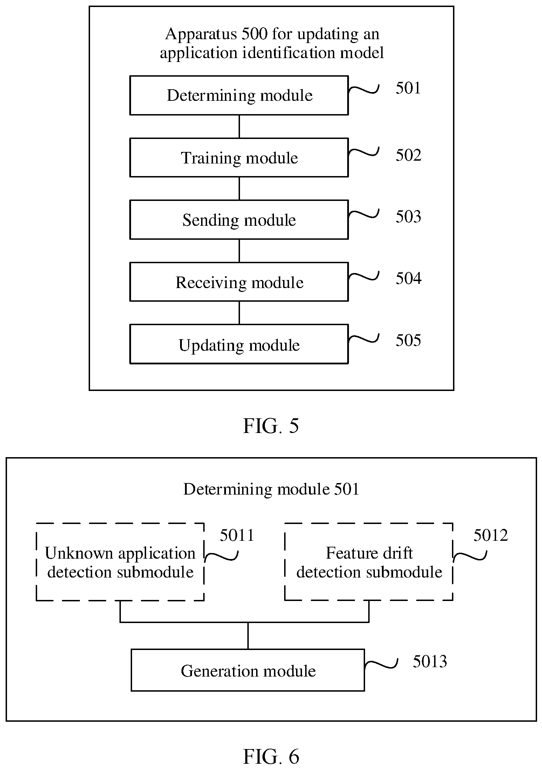

Refer to FIG. 5. An embodiment of this application provides an apparatus 500 for updating an application identification model. The apparatus includes:
a determining module 501, configured to perform step 401 in the foregoing embodiment;
a training module 502, configured to perform step 402 in the foregoing embodiment;
a sending module 503, configured to perform step 403 in the foregoing embodiment;
a receiving module 504, configured to perform step 407 in the foregoing embodiment; and
an update module 505, configured to perform step 408 in the foregoing embodiment.

Optionally, refer to FIG. 6. The determining module 501 includes an unknown application detection submodule 5011 and/or a feature drift detection submodule 5012, and the determining module 501 further includes a generation submodule 5013.

The unknown application detection module 5011 is configured to obtain, based on an application identification result of each piece of data traffic, unknown data traffic belonging to an unknown application from a plurality of pieces of data traffic.

The feature drift detection submodule 5012 is configured to obtain, based on the application identification results of the plurality of pieces of data traffic, target data traffic belonging to a target application category from the plurality of pieces of data traffic. The target application category is an application category of which feature drift occurs on a traffic feature of corresponding data traffic within a specified time period.

The generation submodule 5013 is configured to generate a plurality of training samples based on obtained data traffic.

Optionally, the unknown application detection submodule 5011 is specifically configured to:
obtain, from the plurality of pieces of data traffic, data traffic whose application identification result meets an unknown application condition, and use the obtained data traffic as the unknown data traffic belonging to the unknown application, where the unknown application condition means that a confidence corresponding to each application category in the application identification result is less than a reference threshold, or the unknown application condition means that the application identification result does not belong to a plurality of specified clusters, where the plurality of specified clusters are obtained by clustering traffic features of data traffic of application categories in a set of original training samples of the application identification model.

Optionally, the generation submodule 5013 is specifically configured to:
obtain a traffic feature of the unknown data traffic;
obtain, from the server based on the traffic feature of the unknown data traffic, application information of an application to which the unknown data traffic belongs; and
use the traffic feature of the unknown data traffic as training data in a first training sample, and use the application information of the application to which the unknown data traffic belongs as label data in the first training sample, where the first training sample is one of the plurality of training samples.

Optionally, the feature drift detection submodule 5012 is specifically configured to:
determine, from the plurality of pieces of data traffic based on the application identification results of the plurality of pieces of data traffic, a plurality of pieces of known data traffic that do not belong to an unknown application within the specified time period;
obtain, from the server based on application identification results of the plurality of pieces of known data traffic, the specified time period, and an identifier of the client device, feature drift flags respectively corresponding to a plurality of application categories included in the application identification results of the plurality of pieces of known data traffic, where the feature drift flags indicate whether drift occurs on a traffic feature of data traffic of a corresponding application category;
determine, from the plurality of application categories based on feature drift flags corresponding to the application categories, a target application category of which drift occurs on the traffic feature of the data traffic; and
obtain, from the plurality of pieces of known data traffic, the target data traffic belonging to the target application category.

Optionally, the generation submodule 5013 is specifically configured to:
use a traffic feature of the target data traffic as training data in a second training sample, and use an application category, indicated by an application identification result of the target data traffic, to which the target data traffic belongs as label data in the second training sample, where the second training sample is one of the plurality of training samples.

Optionally, the model data of the trained application identification model includes a model parameter of the trained application identification model, or the model data of the trained application identification model includes difference data between a model parameter of the trained application identification model and a model parameter of an application identification model before training.

Optionally, the jointly updated model data includes a model parameter of the jointly updated application identification model, or the jointly updated model data includes difference data between a model parameter of the jointly updated application identification model and a model parameter of an application identification model before training.

In conclusion, in embodiments of this application, the client device may determine the plurality of training samples based on the identification results of the plurality of pieces of data traffic, and train the application identification model using the training samples. Then, the client device may upload the model data of the trained application identification model to the server, and the server performs joint update based on the model data uploaded by the plurality of client devices. Then, the client device may obtain the jointly updated application identification model based on the jointly updated model data delivered by the server. It can be learned that the jointly updated application identification model is obtained through dynamic update based on features of real-time data traffic collected by the plurality of client devices. In this way, even if an application is updated or a new application emerges, identification accuracy of the application identification model can be better ensured because the model data of the application identification model is dynamically updated based on the features of the data traffic collected by the client devices.

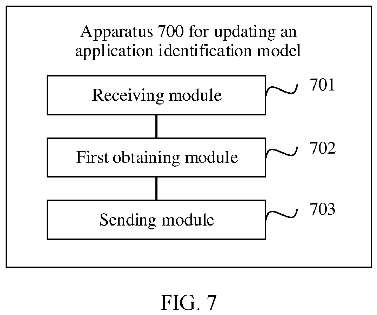

FIG. 7 is an apparatus 700 for updating an application identification model according to an embodiment of this application. The apparatus 700 includes:
a receiving module 701, configured to perform step 404 in the foregoing embodiment;
a first obtaining module 702, configured to perform step 405 in the foregoing embodiment; and
a sending module 703, configured to perform step 406 in the foregoing embodiment.

Optionally, the apparatus further includes a second obtaining module (not shown in the figure).

The receiving module is further configured to receive a traffic feature of unknown data traffic sent by a first client device, where the unknown data traffic is data traffic that belongs to an unknown application and is determined by the first client device from the plurality of pieces of data traffic.

The second obtaining module is configured to obtain, based on the traffic feature of the unknown data traffic, application information of an application to which the unknown data traffic belongs.

The sending module is configured to send, to the first client device, the application information of the application to which the unknown data traffic belongs, so that the first client device generates a training sample based on the application information of the application to which the unknown data traffic belongs.

Optionally, the apparatus further includes a third obtaining module and a determining module (not shown in the figure).

The receiving module is further configured to receive application identification results of a plurality of pieces of known data traffic, a specified time period, and an identifier of the first client device that are sent by the first client device, where the plurality of pieces of known data traffic are data traffic that does not belong to the unknown application within the specified time period and that is determined from the plurality of pieces of data traffic.

The determining module is configured to determine a current profile of a corresponding application category based on the application category and a confidence corresponding to the application category that are included in the application identification results of the plurality of pieces of known data traffic.

The third obtaining module is configured to obtain, based on the identifier of the first client device, a profile of each application category that corresponds to the specified time period and that is determined most recently.

The determining module is further configured to determine, based on a current profile of each application category and a profile of the corresponding application category that is determined most recently, a feature drift flag corresponding to the application category, where the feature drift flag indicates whether drift occurs on a traffic feature of data traffic of the corresponding application category.

The sending module is configured to send feature drift flags corresponding to all the application categories to the first client device, so that the first client device obtains, based on the feature drift flags corresponding to the application categories, data traffic belonging to a target application category, and generates a training sample based on the data traffic belonging to the target application category, where the target application category is an application category of which drift occurs on the traffic feature of the data traffic.

In embodiments of this application, a server may obtain the jointly updated model data based on received trained model data sent by the plurality of client devices. Because the trained model data sent by the client device is obtained through dynamic update based on features of collected real-time data traffic, the jointly updated model data is obtained through dynamic update by the plurality of client devices based on the features of the real-time data traffic collected by the plurality of client devices. In this way, even if an application is updated or a new application emerges, identification accuracy of the application identification model can be better ensured because the model data of the application identification model is dynamically updated based on the features of the data traffic collected by the client devices.

It should be noted that, when the apparatus for updating an application identification model provided in the foregoing embodiment updates an application identification model, division of the foregoing functional modules is merely used as an example for description. In actual application, the foregoing functions may be allocated to different functional modules and implemented according to a requirement. In other words, an internal structure of the device may be divided into different functional modules to implement all or some of the functions described above. In addition, the apparatus for updating an application identification model provided in the foregoing embodiment and the method embodiments for updating an application identification model pertain to a same concept. For a specific implementation process thereof, refer to the method embodiments. Details are not described herein again.

All or some of the foregoing embodiments may be implemented through software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (Digital Versatile Disc, DVD)), a semiconductor medium (for example, a solid-state drive (Solid State Disk, SSD)), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely embodiments of this application, but are not intended to limit this application. Any modification, equivalent replacement, or improvement made without departing from the spirit and principle of this application should fall within the protection scope of this application.

## Claims

1. A method for updating an application identification model, applied to a client device, wherein the method comprises:
determining a plurality of training samples based on application identification results of a plurality of pieces of data traffic, wherein the application identification results are obtained by identifying corresponding data traffic using an application identification model;
training the application identification model based on the plurality of training samples;
sending model data of a trained application identification model to a server, so that the server obtains jointly updated model data based on received model data sent by a plurality of client devices;
receiving the jointly updated model data sent by the server; and
obtaining a jointly updated application identification model based on the jointly updated model data.

2. The method according to claim 1, wherein the determining a plurality of training samples based on application identification results of a plurality of pieces of data traffic comprises:
obtaining, based on the application identification results of the plurality of pieces of data traffic, unknown data traffic belonging to an unknown application from the plurality of pieces of data traffic, and/or obtaining, based on the application identification results of the plurality of pieces of data traffic, target data traffic belonging to a target application category from the plurality of pieces of data traffic, wherein the target application category is an application category of which feature drift occurs on a traffic feature of corresponding data traffic within a specified time period; and
generating the plurality of training samples based on obtained data traffic.

3. The method according to claim 2, wherein the obtaining, based on the application identification results of the plurality of pieces of data traffic, unknown data traffic belonging to an unknown application from the plurality of pieces of data traffic comprises:
obtaining, from the plurality of pieces of data traffic, data traffic whose application identification result meets an unknown application condition, and using the obtained data traffic as the unknown data traffic belonging to the unknown application, wherein the unknown application condition means that a confidence corresponding to each application category in the application identification result is less than a reference threshold, or the unknown application condition means that the application identification result does not belong to a plurality of specified clusters, wherein the plurality of specified clusters are obtained by clustering traffic features of data traffic of application categories in a set of original training samples of the application identification model.

4. The method according to claim 3, wherein the generating the plurality of training samples based on obtained data traffic comprises:
obtaining a traffic feature of the unknown data traffic;
obtaining, from the server based on the traffic feature of the unknown data traffic, application information of an application to which the unknown data traffic belongs; and
using the traffic feature of the unknown data traffic as training data in a first training sample, and using the application information of the application to which the unknown data traffic belongs as label data in the first training sample, wherein the first training sample is one of the plurality of training samples.

5. The method according to claim 2, wherein the obtaining, based on the application identification results of the plurality of pieces of data traffic, target data traffic belonging to a target application category from the plurality of pieces of data traffic comprises:
determining, from the plurality of pieces of data traffic based on the application identification results of the plurality of pieces of data traffic, a plurality of pieces of known data traffic that do not belong to an unknown application within the specified time period;
obtaining, from the server based on application identification results of the plurality of pieces of known data traffic, the specified time period, and an identifier of the client device, feature drift flags respectively corresponding to a plurality of application categories comprised in the application identification results of the plurality of pieces of known data traffic, wherein the feature drift flags indicate whether drift occurs on a traffic feature of data traffic of a corresponding application category;
determining, from the plurality of application categories based on feature drift flags corresponding to the application categories, a target application category of which drift occurs on the traffic feature of the data traffic; and
obtaining, from the plurality of pieces of known data traffic, the target data traffic belonging to the target application category.

6. The method according to claim 5, wherein the generating the plurality of training samples based on obtained data traffic comprises:
using a traffic feature of the target data traffic as training data in a second training sample, and using an application category, indicated by an application identification result of the target data traffic, to which the target data traffic belongs as label data in the second training sample, wherein the second training sample is one of the plurality of training samples.

7. The method according to any one of claims 1 to 6, wherein the model data of the trained application identification model comprises a model parameter of the trained application identification model, or the model data of the trained application identification model comprises difference data between a model parameter of the trained application identification model and a model parameter of an application identification model before training.

8. The method according to any one of claims 1 to 6, wherein the jointly updated model data comprises a model parameter of the jointly updated application identification model, or the jointly updated model data comprises difference data between a model parameter of the jointly updated application identification model and a model parameter of an application identification model before training.

9. A method for updating an application identification model, applied to a server, wherein the method comprises:
receiving model data that is of a trained application identification model and that is sent by a plurality of client devices, wherein the trained application identification model is obtained by training an application identification model based on a plurality of training samples by corresponding client devices, and the plurality of training samples are determined by the corresponding client devices based on application identification results of a plurality of pieces of data traffic;
obtaining jointly updated model data based on a plurality of received model data; and
sending the jointly updated model data to the plurality of client devices, so that the plurality of client devices obtain a jointly updated application identification model based on the jointly updated model data.

10. The method according to claim 9, wherein the method further comprises:
receiving a traffic feature of unknown data traffic sent by a first client device, wherein the unknown data traffic is data traffic that belongs to an unknown application and is determined by the first client device from the plurality of pieces of data traffic;
obtaining, based on the traffic feature of the unknown data traffic, application information of an application to which the unknown data traffic belongs; and
sending, to the first client device, the application information of the application to which the unknown data traffic belongs, so that the first client device generates a training sample based on the application information of the application to which the unknown data traffic belongs.

11. The method according to claim 9 or 10, wherein the method further comprises:
receiving application identification results of a plurality of pieces of known data traffic, a specified time period, and an identifier of the first client device that are sent by the first client device, wherein the plurality of pieces of known data traffic are data traffic that does not belong to the unknown application within the specified time period and that is determined from the plurality of pieces of data traffic;
determining a current profile of a corresponding application category based on the application category and a confidence corresponding to the application category that are comprised in the application identification results of the plurality of pieces of known data traffic;
obtaining, based on the identifier of the first client device, a profile of each application category that corresponds to the specified time period and that is determined most recently;
determining, based on a current profile of each application category and a profile of the corresponding application category that is determined most recently, a feature drift flag corresponding to the application category, wherein the feature drift flag indicates whether drift occurs on a traffic feature of data traffic of the corresponding application category; and
sending feature drift flags corresponding to all the application categories to the first client device, so that the first client device obtains, based on the feature drift flags corresponding to the application categories, data traffic belonging to a target application category, and generates a training sample based on the data traffic belonging to the target application category, wherein the target application category is an application category of which drift occurs on the traffic feature of the data traffic.

12. An apparatus for updating an application identification model, wherein the apparatus comprises:
a determining module, configured to determine a plurality of training samples based on application identification results of a plurality of pieces of data traffic, wherein the application identification results are obtained by identifying corresponding data traffic using an application identification model;
a training module, configured to train the application identification model based on the plurality of training samples;
a sending module, configured to send model data of a trained application identification model to a server, so that the server obtains jointly updated model data based on received model data sent by a plurality of client devices;
a receiving module, configured to receive the jointly updated model data sent by the server; and
an updating module, configured to obtain a jointly updated application identification model based on the jointly updated model data.

13. The apparatus according to claim 12, wherein the determining module comprises:
an unknown application detection submodule and/or a feature drift detection submodule, wherein the unknown application detection module is configured to obtain, based on the application identification results of the plurality of pieces of data traffic, unknown data traffic belonging to an unknown application from the plurality of pieces of data traffic, and the feature drift detection submodule is configured to obtain, based on the application identification results of the plurality of pieces of data traffic, target data traffic belonging to a target application category from the plurality of pieces of data traffic, wherein the target application category is an application category of which feature drift occurs on a traffic feature of corresponding data traffic within a specified time period; and
the determining module further comprises a generation submodule, configured to generate the plurality of training samples based on obtained data traffic.

14. The apparatus according to claim 13, wherein the unknown application detection submodule is specifically configured to:
obtain, from the plurality of pieces of data traffic, data traffic whose application identification result meets an unknown application condition, and use the obtained data traffic as the unknown data traffic belonging to the unknown application, wherein the unknown application condition means that a confidence corresponding to each application category in the application identification result is less than a reference threshold, or the unknown application condition means that the application identification result does not belong to a plurality of specified clusters, wherein the plurality of specified clusters are obtained by clustering traffic features of data traffic of application categories in a set of original training samples of the application identification model.

15. The apparatus according to claim 14, wherein the generation submodule is specifically configured to:
obtain a traffic feature of the unknown data traffic;
obtain, from the server based on the traffic feature of the unknown data traffic, application information of an application to which the unknown data traffic belongs; and
use the traffic feature of the unknown data traffic as training data in a first training sample, and use the application information of the application to which the unknown data traffic belongs as label data in the first training sample, wherein the first training sample is one of the plurality of training samples.

16. The apparatus according to claim 13, wherein the feature drift detection submodule is specifically configured to:
determine, from the plurality of pieces of data traffic based on the application identification results of the plurality of pieces of data traffic, a plurality of pieces of known data traffic that do not belong to an unknown application within the specified time period;
obtain, from the server based on application identification results of the plurality of pieces of known data traffic, the specified time period, and an identifier of the client device, feature drift flags respectively corresponding to a plurality of application categories comprised in the application identification results of the plurality of pieces of known data traffic, wherein the feature drift flags indicate whether drift occurs on a traffic feature of data traffic of a corresponding application category;
determine, from the plurality of application categories based on feature drift flags corresponding to the application categories, a target application category of which drift occurs on the traffic feature of the data traffic; and
obtain, from the plurality of pieces of known data traffic, the target data traffic belonging to the target application category.

17. The apparatus according to claim 16, wherein the generation submodule is specifically configured to:
use a traffic feature of the target data traffic as training data in a second training sample, and use an application category, indicated by an application identification result of the target data traffic, to which the target data traffic belongs as label data in the second training sample, wherein the second training sample is one of the plurality of training samples.

18. The apparatus according to any one of claims 12 to 17, wherein the model data of the trained application identification model comprises a model parameter of the trained application identification model, or the model data of the trained application identification model comprises difference data between a model parameter of the trained application identification model and a model parameter of an application identification model before training.

19. The apparatus according to any one of claims 12 to 17, wherein the jointly updated model data comprises a model parameter of the jointly updated application identification model, or the jointly updated model data comprises difference data between a model parameter of the jointly updated application identification model and a model parameter of an application identification model before training.

20. An apparatus for updating an application identification model, wherein the apparatus comprises:
a receiving module, configured to receive model data that is of a trained application identification model and that is sent by a plurality of client devices, wherein the trained application identification model is obtained by training an application identification model based on a plurality of training samples by corresponding client devices, and the plurality of training samples are determined by the corresponding client devices based on application identification results of a plurality of pieces of data traffic;
a first obtaining module, configured to obtain jointly updated model data based on a plurality of received model data; and
a sending module, configured to send the jointly updated model data to the plurality of client devices, so that the plurality of client devices obtain a jointly updated application identification model based on the jointly updated model data.

21. The apparatus according to claim 20, wherein the apparatus further comprises a second obtaining module, wherein
the receiving module is further configured to receive a traffic feature of unknown data traffic sent by a first client device, wherein the unknown data traffic is data traffic that belongs to an unknown application and is determined by the first client device from the plurality of pieces of data traffic;
the second obtaining module is configured to obtain, based on the traffic feature of the unknown data traffic, application information of an application to which the unknown data traffic belongs; and
the sending module is configured to send, to the first client device, the application information of the application to which the unknown data traffic belongs, so that the first client device generates a training sample based on the application information of the application to which the unknown data traffic belongs.

22. The apparatus according to claim 20 or 21, wherein the apparatus further comprises a third obtaining module and a determining module, wherein
the receiving module is further configured to receive application identification results of a plurality of pieces of known data traffic, a specified time period, and an identifier of the first client device that are sent by the first client device, wherein the plurality of pieces of known data traffic are data traffic that does not belong to the unknown application within the specified time period and that is determined from the plurality of pieces of data traffic;
the determining module is configured to determine a current profile of a corresponding application category based on the application category and a confidence corresponding to the application category that are comprised in the application identification result of the plurality of pieces of known data traffic;
the third obtaining module is configured to obtain, based on the identifier of the first client device, a profile of each application category that corresponds to the specified time period and that is determined most recently;
the determining module is further configured to determine, based on a current profile of each application category and a profile of the corresponding application category that is determined most recently, a feature drift flag corresponding to the application category, wherein the feature drift flag indicates whether drift occurs on a traffic feature of data traffic of the corresponding application category; and
the sending module is configured to send feature drift flags corresponding to all the application categories to the first client device, so that the first client device obtains, based on the feature drift flags corresponding to the application categories, data traffic belonging to a target application category, and generates a training sample based on the data traffic belonging to the target application category, wherein the target application category is an application category of which drift occurs on the traffic feature of the data traffic.

23. A computer-readable storage medium, wherein the computer-readable storage medium stores computer program code, and when the computer program code is executed by a computer device, the computer device performs the method according to any one of claims 1 to 8; or the computer device performs the method according to any one of claims 9 to 11.
